# EUROPEAN PATENT APPLICATION

(11) **EP 4 796 463 A1**
(43) Date of publication of application: **26.08.2026**
(21) Application number: 24892681.8
(22) Date of filing: 28.04.2024
(51) Int. Cl.: B65G 1/04, B65G 1/137

(54) **IN-WAREHOUSE PICKING CONTROL METHOD AND SYSTEM**

(30) Priority: 23.11.2023 CN 202311575043
(71) Applicant: Libiao Robotics Holdings Pte. Ltd., 608521 Singapore (SG)
(72) Inventor: ZHU, Jianqiang, Hangzhou, Zhejiang 311199 (CN)
(74) Representative: Ottazzo, Marco Francesco Agostino
(86) International application number: PCT/CN2024/090386
(87) International publication number: WO 2025/107515

(57) **Abstract**

An in-warehouse picking control method and system. The method is applied to a stereoscopic warehouse, which comprises a plurality of racks (10), wherein each rack (10) is provided with a plurality of layers of storage spaces (101), and goods boxes (104) are placed at storage locations in the storage spaces (101). According to the current order, a control server is configured to: on the basis of picked-goods information of the current order, determine a first target storage location (B1) where first picked goods (A1) are located; control a first in-warehouse picking robot (C1) corresponding to the first target storage location (B1) to pick up the first picked goods (A1) and place same onto a transferring assembly or transferring goods box of a ground freight robot (D1); dispatch the ground freight robot (D1) to move to a second target storage location (B2) where second picked goods (A2) are located, wherein the ground freight robot (D1) is located within a reachable range of a second in-warehouse picking robot (C2); control the second in-warehouse picking robot (C2) to pick up the second picked goods (A2) from the second target storage location (B2) and place the second picked goods onto the transferring assembly or transferring goods box of the ground freight robot (D1); and repeat the above steps to complete a rapid order fulfillment and outbound process.

## Description

### Cross-reference to Related Applications

The present invention claims the priority to the Chinese Patent Application No. 2023115750438, filed with the China National Intellectual Property Administration on November 23, 2023, and entitled "in-warehouse picking control method and system", the entire contents of which are incorporated herein by reference.

### Technical Field

The present invention relates to the technical field of warehouse picking, and in particular, to an in-warehouse picking control method and system.

### Background Art

Warehousing is the link with the highest logistics cost. Existing warehousing systems require the construction of storage bases or storage centers. Modern logistics warehouses store goods in a fixed environment and perform processes such as inbound, outbound, returns, and consolidation according to information such as SKU, date, and sequence under the instruction of business orders. Taking outbound as an example, existing stereoscopic storage systems require storage racks to take out bins or goods one by one via storage freight robots, and the storage freight robots then transport the bins or goods to a workstation or picking system.

Therefore, existing warehousing and transmission systems not only have reduced warehousing efficiency, insufficient space utilization, and high ground costs, but also cannot complete high-flow goods transmission in a warehousing environment.

### Summary

In view of this, the present invention provides an in-warehouse picking control method and related devices to achieve high-flow goods transmission in a warehousing environment.

Therefore, the present invention discloses an in-warehouse picking control method for a stereoscopic warehouse, wherein the stereoscopic warehouse includes a plurality of racks, the racks are provided with multi-tier reservation units, and bins are placed in slots of the reservation units; and according to a current order, a control server is configured for:
- determining a first target slot where first goods to be picked are located based on goods picking information of the current order;
- controlling a first in-warehouse picking robot corresponding to the first target slot to take out the first goods to be picked and place the first goods to be picked on a docking assembly or a docking bin of an autonomous mobile robot;
- scheduling the autonomous mobile robot to move to a second target slot where second goods to be picked are located, wherein the autonomous mobile robot is positioned within a reachable range of a second in-warehouse picking robot;
- controlling the second in-warehouse picking robot to take the second goods to be picked out of the second target slot and place the second goods to be picked on the docking assembly or the docking bin of the autonomous mobile robot; and
- repeating the above steps until all goods to be picked are placed on the docking assembly or the docking bin of the autonomous mobile robot, such that the autonomous mobile robot transports all the goods to be picked to a workstation.

Optionally, the step of controlling the first in-warehouse picking robot corresponding to the first target slot to take out the first goods to be picked includes the following steps:
- utilizing a first push-pull bin task module to pull out a first bin where the first goods to be picked are located from the first target slot;
- pushing the first bin into the first target slot after the first picking task module takes out the first goods to be picked;
- utilizing a second push-pull bin task module to pull out a second bin where the second goods to be picked are located from a second target slot; and
- pushing the second bin into the second target slot after the second picking task module takes out the second goods to be picked.

Optionally, the in-warehouse picking robot includes a picking task module and a push-pull bin task module;
- the picking task module places goods into a docking assembly or a docking bin of an autonomous mobile robot running at a bottom of the rack, or to take goods out of the docking assembly or the docking bin and place the goods into the bin; and
- the picking task module at least includes a first movable member and a picking mechanism;
- one or more partitions of slots of a lowest rack tier are removed from the rack, to provide a passageway for the autonomous mobile robot; or
- one or more rack tiers are removed from the rack, to provide a matching height and support the freight robot running on the aisle.

Alternatively, an arrangement of a fixed rail transmission device on the rack is specifically implemented to include:
- the first transverse rail, the first upright, the first movable member, and a connecting mechanism of the push-pull bin task module;
and the connecting mechanism of the push-pull bin task module is provided with:
- a support structure of a push-pull bin module; and
- a conveying component of the push-pull bin module.

In another aspect, the present invention further discloses an in-warehouse picking control method for a stereoscopic warehouse, wherein the stereoscopic warehouse includes a plurality of racks, the racks are provided with multi-tier reservation units, and bins are placed in slots of the reservation units; and according to return demand information, a control server is configured for:
- causing an autonomous mobile robot executing a return instruction to move to a ground area of a rack where first returned goods are located, and controlling a first in-warehouse picking robot to take the first returned goods out of a docking position or a docking bin of a first autonomous mobile robot and place the first returned goods back into a slot or a bin to which the first returned goods belong;
- scheduling the autonomous mobile robot to move to a ground area of a rack where second returned goods are located, and controlling a second in-warehouse picking robot to take the second returned goods out of the docking position or the docking bin and place the second returned goods back into a slot or a bin to which the second returned goods belong; and
- repeating the above steps until all returned goods are placed back into corresponding slots or bins.

Optionally, the step of controlling the first in-warehouse picking robot to take the first returned goods out of the docking position or the docking bin of the first autonomous mobile robot and place the first returned goods back into the slot or the bin to which the first returned goods belong includes:
- utilizing a first push-pull bin task module to pull out a first bin to which the first returned goods belong from a first target slot; and
- utilizing the first push-pull bin task module to push the first bin into the first target slot after the first picking task module places the first returned goods back into the first bin;
and the step of controlling the second in-warehouse picking robot to take the second returned goods out of the docking position or the docking bin and place the second returned goods back into the slot or the bin to which the second returned goods belong is implemented by the following steps:
- utilizing a second push-pull bin task module to pull out a second bin to which the second returned goods belong from a second target slot; and
- utilizing the second push-pull bin task module to push the second bin into the second target slot after the second picking task module places the second returned goods back into the second bin.

Optionally, the in-warehouse picking robot includes a picking task module and a push-pull bin task module;
- the picking task module places goods into a docking assembly or a docking bin of an autonomous mobile robot running at a bottom of the rack, or takes goods out of the docking assembly or the docking bin and place the goods into the bin; and
- the picking task module at least includes a first movable member and a picking mechanism;
- one or more partitions of slots of a lowest rack tier are removed from the rack, to provide a passageway for the autonomous mobile robot; or
- one or more rack tiers are removed from the rack, to provide a matching height and support the freight robot running on the aisle.

Optionally, an arrangement of a fixed rail transmission device on the rack is specifically implemented to include:
- the first transverse rail, the first upright, the first movable member, and a connecting mechanism of the push-pull bin task module;
and the connecting mechanism of the push-pull bin task module is provided with:
- a support structure of a push-pull bin module; and
- a conveying component of the push-pull bin module.

In another aspect, the present invention further discloses an in-warehouse picking control method for a stereoscopic warehouse, wherein the stereoscopic warehouse includes a plurality of racks, each of the racks is provided with multi-tier reservation units, and bins are placed in slots of the reservation units; and a control server is configured for:
- determining a first target slot where a first bin is located based on consolidation request information;
- in a bin pulling step, causing an autonomous mobile robot executing a consolidation instruction to move to a ground area of a rack where the first target slot is located, controlling a bin pulling task module corresponding to the first target slot to place the first bin on a docking assembly of the autonomous mobile robot;
- in a consolidation step, scheduling the autonomous mobile robot to move to a ground area of a rack where a second bin is located, and controlling an in-warehouse picking robot corresponding to the second bin to take part or all of goods in the first bin out of the first bin and place the goods into the second bin; and
- repeating the above consolidation step until the first bin is emptied.

Optionally, the consolidation request information is specifically a consolidation request for the same kind of SKU.

Optionally, the controlling an in-warehouse picking robot corresponding to the second bin to take part or all of goods in the first bin out of the first bin and place the goods into the second bin is specifically implemented by the following steps:
- utilizing a push-pull bin task module to pull out a second bin to which the second goods belong from a second target slot;
- after the in-warehouse picking robot corresponding to the second bin places part or all of the goods in the first bin into the second bin, utilizing the push-pull bin task module to push the second bin into the second target slot.

Optionally, the in-warehouse picking robot includes a picking task module and a push-pull bin task module;
- the picking task module places goods into a docking assembly or a docking bin of an autonomous mobile robot running at a bottom of the rack, or takes goods out of the docking assembly or the docking bin and places the goods into the bin; and
- the picking task module at least includes a first movable member and a picking mechanism;
- one or more partitions of slots of a lowest rack tier are removed from the rack, to provide a passageway for the autonomous mobile robot; or
- one or more rack tiers are removed from the rack, to provide a matching height and support the freight robot running on the aisle.

Optionally, an arrangement of a fixed rail transmission device on the rack is specifically implemented to include:
- the first transverse rail, the first upright, the first movable member, and a connecting mechanism of the push-pull bin task module;
and the connecting mechanism of the push-pull bin task module is provided with:
- a support structure of a push-pull bin module; and
- a conveying component of the push-pull bin module.

In another aspect, the present invention further discloses an in-warehouse picking control method for a stereoscopic warehouse, wherein the stereoscopic warehouse includes a plurality of racks, the racks are provided with multi-tier reservation units, and bins are placed in slots of the reservation units; and according to a current order, a control server is configured for:
- determining a first target slot where a first reverse goods consolidation bin is located based on reverse goods consolidation request information;
- causing an autonomous mobile robot executing a reverse goods consolidation instruction to move to the first target slot, and controlling a first in-warehouse picking robot corresponding to the first target slot to take all goods in the reverse goods consolidation bin out in one or more operations and place the goods on a docking position or a docking bin of the autonomous mobile robot; and
- scheduling the autonomous mobile robot to move to a ground area of a rack where a target bin for receiving the deconsolidated goods is located, and controlling a second in-warehouse picking robot to take all the deconsolidated goods out of the docking position or the docking bin of the autonomous mobile robot and place the deconsolidated goods into the target bin.

Optionally, the step of controlling a first in-warehouse picking robot corresponding to the first target slot to take all goods in the reverse goods consolidation bin out in one or more operations and place the goods on a docking position or a docking bin of the autonomous mobile robot includes:
- utilizing a first push-pull bin task module to pull the reverse goods consolidation bin out of its target slot;
- after the first picking task module takes all the goods out in one or more operations, utilizing the first push-pull bin task module to push the reverse goods consolidation bin into its target slot;
and the controlling a second in-warehouse picking robot to take all the deconsolidated goods out of the docking position or the docking bin of the autonomous mobile robot and place the deconsolidated goods into the target bin includes:
- utilizing a second push-pull bin task module to pull the target bin for receiving the deconsolidated goods out of its target slot; and
- after a second picking task module places all the deconsolidated goods into the target bin for receiving the deconsolidated goods, utilizing the second push-pull bin task module to push the target bin for receiving the deconsolidated goods into its target slot.

Optionally, the in-warehouse picking robot includes a picking task module and a push-pull bin task module;
- the picking task module places goods into a docking assembly or a docking bin of an autonomous mobile robot running at a bottom of the rack, or takes goods out of the docking assembly or the docking bin and place the goods into the bin; and
- the picking task module at least includes a first movable member and a picking mechanism;
- one or more partitions of slots of a lowest rack tier are removed from the rack, to provide a passageway for the autonomous mobile robot; or
- one or more rack tiers are removed from the rack, to provide a matching height and support the freight robot running on the aisle.

Optionally, an arrangement of a fixed rail transmission device on the rack is specifically implemented to include:
- the first transverse rail, the first upright, the first movable member, and a connecting mechanism of the push-pull bin task module;
and the connecting mechanism of the push-pull bin task module is provided with:
- a support structure of a push-pull bin module; and
- a conveying component of the push-pull bin module.

Optionally, the reverse goods consolidation request information is specifically a reverse goods consolidation request for the same kind of SKU.

In another aspect, the present invention further discloses an in-warehouse picking control system, including:
- at least one processor, and a memory communicatively connected to the at least one processor;
- wherein the memory stores instructions executable by the at least one processor, and the instructions, when executed by the at least one processor, cause the at least one processor to perform the aforementioned in-warehouse picking control method.

In the present invention, a goods picking device is utilized to cooperate with a push-pull bin module, and a freight robot at the bottom of the rack is utilized to complete high-flow key operations such as picking, returns, and consolidation according to demands of a current order. The goods picking device is provided with a transverse rail for an upright to move. Through the configuration of racks and the transformation of a rack tier at the bottom of a reservation unit, a running passageway is provided for the freight robot or a picking robot, which fundamentally solves the problem of waste in existing reservation unit and makes in-warehouse picking possible in dense rack scenarios. On this basis, bins can be accessed through the push-pull bin module and placed into or taken out of a docking assembly or a docking bin of the freight robot running at the bottom of the rack, thereby successfully completing goods storage, goods/bin transfer, and goods/bin picking within the reservation unit. On the basis of realizing in-warehouse goods picking, the utilization rate of storage space, the speed of goods in/out flow, and picking efficiency are greatly improved.

### Brief Description of Drawings

To more clearly illustrate the technical solutions in the specific embodiments of the present invention or the prior art, the drawings used in the description of the specific embodiments or the prior art will be briefly introduced below. Obviously, the drawings in the following description are some embodiments of the present invention. For those of ordinary skill in the art, other accompanying drawings can be obtained based on these drawings without inventive effort.
FIG. 1 shows a structural diagram of a storage rack;
FIG. 2 is a schematic structural diagram of a freight robot;
FIG. 3 is a flowchart of a first type of picking outbound in the in-warehouse picking control method;
FIG. 4 is a schematic structural diagram of an automatic stereoscopic warehouse during picking outbound in an in-warehouse picking control method according to an embodiment;
FIG. 5 is a schematic diagram of the operation flow direction during picking outbound in an automatic stereoscopic warehouse in an in-warehouse picking control method according to an embodiment;
FIG. 6 is a flowchart of a second type of picking outbound in the in-warehouse picking control method;
FIG. 7 is a schematic structural diagram of a goods picking device;
FIG. 8 is a schematic structural diagram of a fixed rail transmission device;
FIG. 9 is a schematic structural diagram of the goods picking device and the fixed rail transmission device;
FIG. 10 is a first return flowchart in an in-warehouse picking control method according to an embodiment;
FIG. 11 is a schematic structural diagram of an automatic stereoscopic warehouse during return operations in an in-warehouse picking control method according to an embodiment;
FIG. 12 is a schematic diagram of the return operation flow direction in a stereoscopic warehouse in an in-warehouse picking control method according to an embodiment;
FIG. 13 is a second return flowchart in an in-warehouse picking control method according to an embodiment;
FIG. 14 is a flowchart of consolidation in an in-warehouse picking control method according to an embodiment;
FIG. 15 is a schematic structural diagram of an automatic stereoscopic warehouse during consolidation operations in an in-warehouse picking control method according to an embodiment;
FIG. 16 is a schematic diagram of the consolidation operation flow direction in a stereoscopic warehouse in an in-warehouse picking control method according to an embodiment;
FIG. 17 is a third return flowchart in an in-warehouse picking control method according to an embodiment;
FIG. 18 is a first reverse goods consolidation flowchart in an in-warehouse picking control method according to an embodiment;
FIG. 19 is a schematic structural diagram of an automatic stereoscopic warehouse during reverse goods consolidation operations in an in-warehouse picking control method according to an embodiment;
FIG. 20 is a schematic diagram of the reverse goods consolidation operation flow direction in a stereoscopic warehouse in an in-warehouse picking control method according to an embodiment;
FIG. 21 is a second reverse goods consolidation flowchart in an in-warehouse picking control method according to an embodiment; and
FIG. 22 is a schematic structural diagram of an in-warehouse picking control system.

### Detailed Description of Embodiments

To make the objectives, technical solutions, and advantages of the embodiments of the present invention clearer, the technical solutions in the embodiments of the present invention will be described clearly and completely below with reference to the drawings in the embodiments of the present invention. Apparently, the described embodiments are only some embodiments of the present invention, rather than all of them. Generally, components of the embodiments of the present invention described and illustrated in the drawings herein can be arranged and designed in various different configurations.

Therefore, the following detailed description of the embodiments of the present invention provided in the drawings is not intended to limit the scope of the claimed disclosure but merely represents selected embodiments thereof. Based on the embodiments of the present invention, all other embodiments obtained by those of ordinary skill in the art without inventive work shall fall within the protection scope of the present invention.

It should be noted that similar reference numerals and letters in the following drawings denote similar items, and therefore, once an item is defined in one drawing, it does not need to be further defined and explained in subsequent drawings.

In the description of the present invention, it should be noted that orientation or positional relationships indicated by terms such as "upper", "lower", "vertical", "horizontal", "inner", "outer" are based on orientation or positional relationships shown in the drawings, or are orientation or positional relationships typically assumed when the disclosed product is used. They are used only for convenience in describing the present invention and simplifying the description, and do not indicate or imply that the referred apparatus or element must have a specific orientation, be constructed and operated in a specific orientation, and therefore should not be construed as limiting the present invention. Furthermore, terms such as "first", "second", "third", etc. are used only for distinguishing descriptions and should not be understood as indicating or implying relative importance.

Furthermore, terms such as "horizontal", "vertical", etc. do not require that the components be absolutely horizontal or plumb, but can be slightly inclined. For example, "horizontal" merely means its direction is more horizontal relative to "vertical" and does not mean the structure must be completely horizontal but can be slightly inclined.

In the description of the present invention, it should also be noted that unless otherwise explicitly specified and defined, terms "provided", "installed", "connected" should be interpreted broadly. For example, a connection can be a fixed connection, a detachable connection, or an integral connection; it can be a mechanical connection, an electrical connection; and it can be a direct connection, or an indirect connection through an intermediate medium, or can be an internal communication between two elements. For those of ordinary skill in the art, the specific meanings of the above terms in the present invention can be understood based on specific situations.

Some embodiments of the present invention will be described in detail below with reference to the drawings. The following embodiments and features in the embodiments can be combined with each other provided there is no conflict.

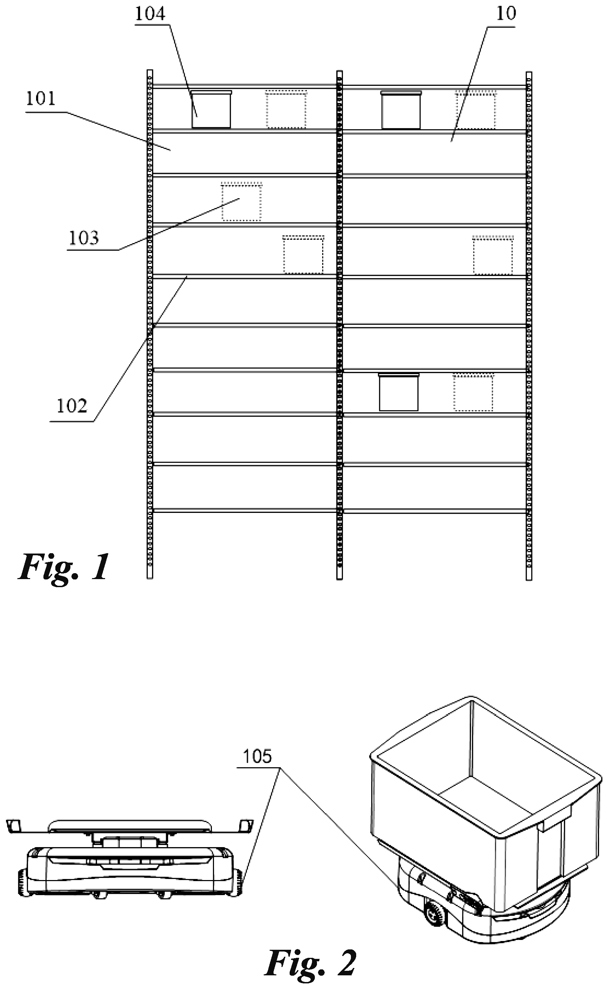

FIG. 1 shows a structural diagram of a storage rack 10, configured for storage. The rack 10 is provided with multi-tier reservation units 101, and bins 104 are placed in slots 103 of the reservation units 101. The rack is horizontally supported by partitions 102.

Referring to FIG. 2, a plurality of autonomous mobile robots 105 can dock bins and goods. The autonomous mobile robot is a robot running on the aisle floor of the rack. As a possible embodiment, the autonomous mobile robot can be an AGV, i.e., automated guided vehicle, typically also called an AGV cart; or an AMR, i.e., autonomous mobile robot.

In this specification, the control server is a centralized control cloud server or local server, which is a host coordinating the working states of a goods picking device and a fixed rail transmission device within the warehouse.

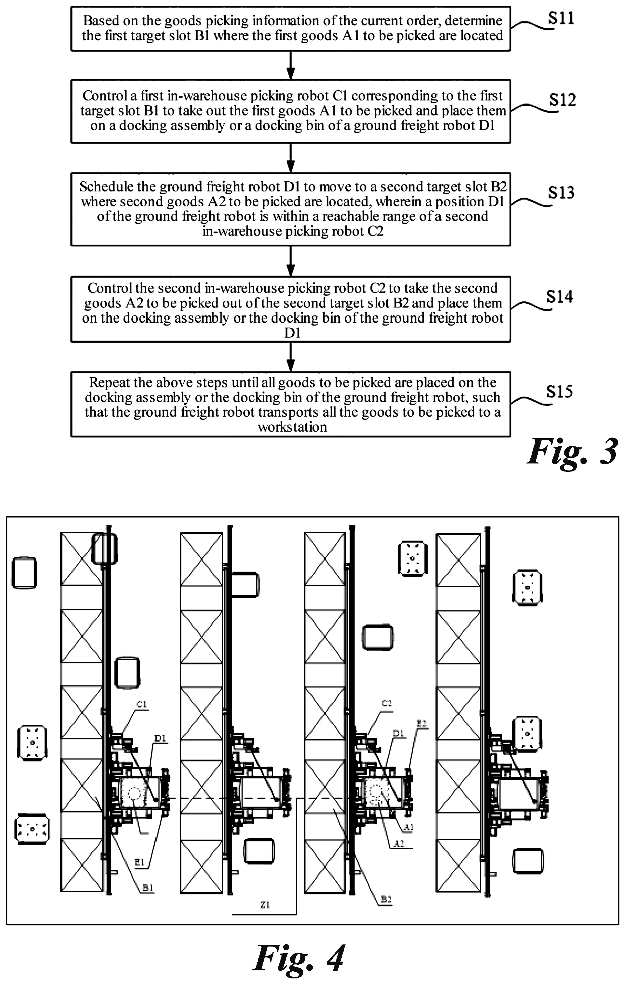

In the scenario of picking and outbound, referring to FIGS. 3 and 4, the control server is configured for:
- S11: based on goods picking information of a current order, determining a first target slot B1 where first goods A1 to be picked are located;
- S12: controlling a first in-warehouse picking robot C1 corresponding to the first target slot B1 to take out the first goods A1 to be picked and place them on a docking assembly or a docking bin of an autonomous mobile robot D1;
- S13: scheduling the autonomous mobile robot D1 to move to a second target slot B2 where second goods A2 to be picked are located, wherein a position D1 of the autonomous mobile robot is within a reachable range of a second in-warehouse picking robot C2;
- S14: controlling the second in-warehouse picking robot C2 to take the second goods A2 to be picked out of the second target slot B2 and place them on the docking assembly or the docking bin of the autonomous mobile robot D1; and
- repeating the above steps until all goods to be picked are placed on the docking assembly or the docking bin of the autonomous mobile robot, such that the autonomous mobile robot transports all the goods to be picked to a workstation.

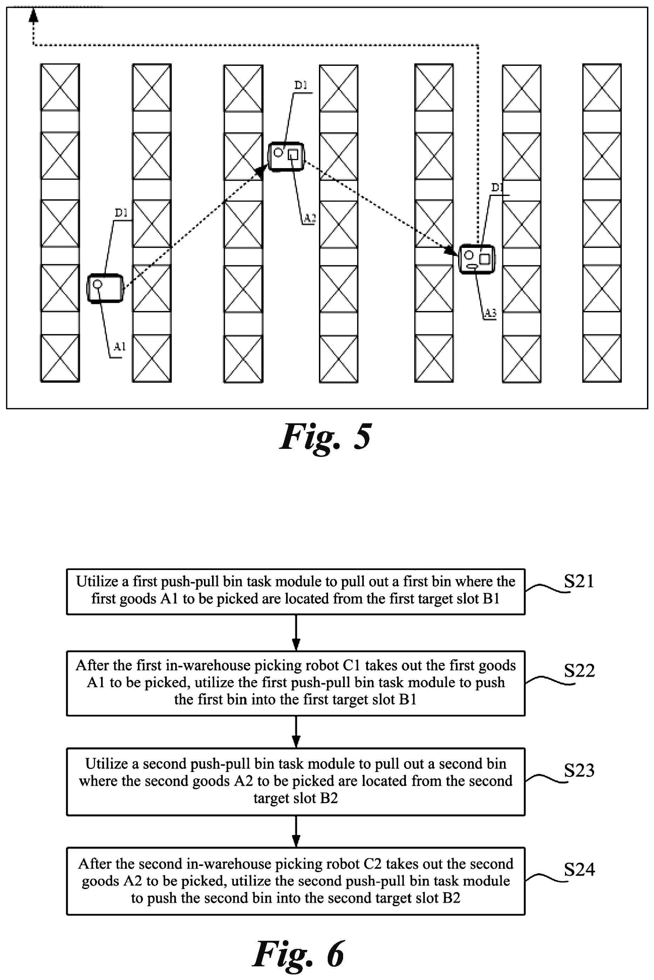

The objective of repeating these steps is that, with reference to FIG. 5, the goods to be picked for an order can be three or more items, distributed across different racks. Then, based on the process of S11 to S14, picking can be performed by the in-warehouse picking robot on the racks where the goods to be picked are located, and the goods can be placed on the docking assembly or the docking bin of the autonomous mobile robot D1.

As can be seen from FIGS. 4 and 5, in a picking and outbound order, the autonomous mobile robot D1 can continuously undertake and carry goods for outbound based on the slots of the goods to be picked, without repeatedly returning to the workstation.

In the prior art, the autonomous mobile robot D1 carries a single item repeatedly back to the workstation or sorting table. That is, the outbound of goods A1, A2, and A3 relies on the autonomous mobile robot D1 making three round trips to complete the outbound.

However, in the present invention, the in-warehouse picking robot can directly place the goods A1 to be picked, A2, and A3 onto the docking assembly or docking bin of the autonomous mobile robot D1, and utilize the path planning function of the autonomous mobile robot (the path of the autonomous mobile robot is indicated by a dashed line in the figure) for continuous operation, reducing round trips. This saves the time wasted when the autonomous mobile robot D1 carries a single item repeatedly back to the workstation or sorting table for picking and outbound. This enables the picking and outbound operation to achieve a warehouse capacity of over 100,000 bins and a flow rate of 10,000 bins/hour, improving operational efficiency by nearly 100% compared to the prior art.

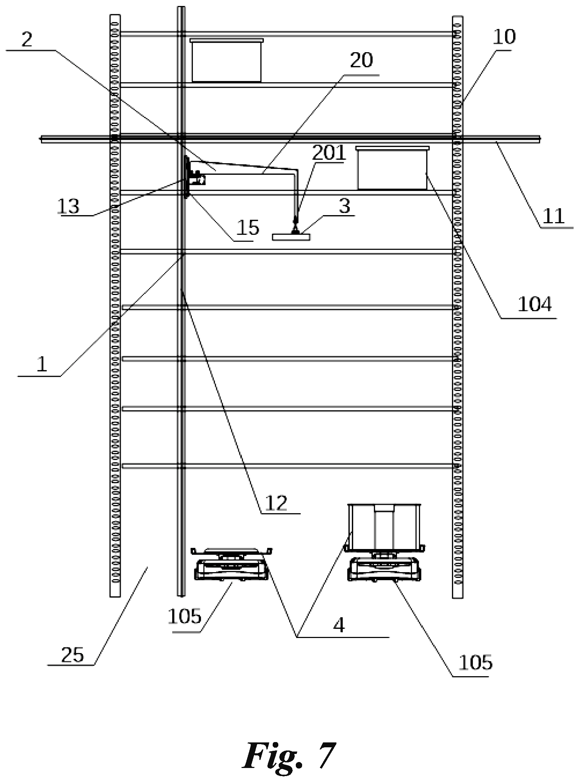

Referring to FIG. 7, a goods picking device 1 is mounted on the rack. The goods picking device 1 drives a picking task module 2 to place goods 3 into a docking assembly or a docking bin 4 of an autonomous mobile robot 105 running at the bottom of the rack 10, or to take goods out of the docking assembly or the docking bin 4 and place them into the bin 104. The picking task module 2 at least includes a first movable member 13 and a picking mechanism 20.

The arrangement of the goods picking device 1 on the rack 10 is specifically implemented to include a first transverse rail 11, a first upright 12, the first movable member 13, and a connecting mechanism of the picking task module 2.

The first transverse rail 11 is fixed on the rack 10.

It should be noted that the first transverse rail 11 is fixed on a beam or an upright of the rack 10. When the rack is long in the transverse direction, fixing the transverse rail can require the use of beams and uprights of individual racks, extending to adjacent racks and beams.

The first upright 12 is vertically arranged on the first transverse rail 11 and can slide transversely;
- the first upright 12 slides along the first transverse rail 11, enabling the first movable member 13 to be positioned at columns of the rack; and
- the first movable member 13 is arranged on the first upright 12 and can slide along the first upright 12.

With the above arrangement, the first movable member 13 can move horizontally and vertically, enabling the first movable member 13 to be positioned at tiers of the rack.

The first movable member 13 is provided with a connecting mechanism 15 of the picking task module 2.

Driven by the first movable member 13, the picking task module 2 uses the picking mechanism to access goods 3, placing them into the docking assembly or docking bin of the autonomous mobile robot 105 running at the bottom of the rack.

It is particularly important to note that, in the solution of the present invention, a bottom partition of the storage rack is removed. Here, the partition represents components that provide slot support for different types of storage racks, and surrounding components such as beams that provide stability for the partition. Removing the partition to provide a matching height actually requires removing surrounding components that would block the autonomous mobile robot from running on the aisle. The partition is not limited to the material and style set in the storage rack. To support the autonomous mobile robot running on the aisle and completing docking actions, the bottom partition between adjacent uprights of the storage rack is removed to form a docking position 25 for the autonomous mobile robot. It should be further noted that the bottom partition of the rack includes the partition itself and crossbeams, such that by removing the partition itself and/or the crossbeams, an activity space for the autonomous mobile robot can be provided.

More specifically, the picking mechanism has: a suction mechanism 201 and/or a gripping mechanism (not shown). The suction mechanism 201 and/or the gripping mechanism can be connected to the first movable member 13 through the connecting mechanism 15 of the picking task module, i.e., an extension member of the suction mechanism 201 and/or the gripping mechanism. The extension member can be a multi-segment robotic arm with degrees of freedom. The suction mechanism 201 can come into contact with goods through generated suction force and maintain contact until the goods 3 are placed into the docking assembly or docking bin of the freight robot running at the bottom of the rack or taken out from the docking assembly and placed into the bin.

Referring to FIGS. 4, 5, 6, and 7, the step of controlling a first in-warehouse picking robot corresponding to the first target slot to take out the first goods to be picked includes:
- S21: utilizing a first push-pull bin task module (i.e., a storage and retrieval task module, which is the equipment of automated storage and retrieval system (AS/RS)) E1 to pull out a first bin where the first goods A1 to be picked are located from a first target slot B1;
- S22: referring to FIG. 4, after the first picking task module C1 takes out the first goods A1 to be picked, pushing the first bin into the first target slot B1;
- S23: utilizing a second push-pull bin task module E2 to pull out a second bin where the second goods A2 to be picked are located from a second target slot B2; and
- S24: after the second picking task module C2 takes out the second goods A2 to be picked, pushing the second bin into the second target slot B2.

First, it must be clear that the first push-pull bin task module E1 is a matching task module that performs push-pull operations on the first bin where the first goods A1 to be picked are located. The first push-pull bin task module can be a vertical transmission device or a fixed rail transmission device. At the target slot of the target rack, the push-pull bin module is used to pull out the target bin. The picking task module 2 of the goods picking device, i.e., the picking task module, picks the target goods within the target bin.

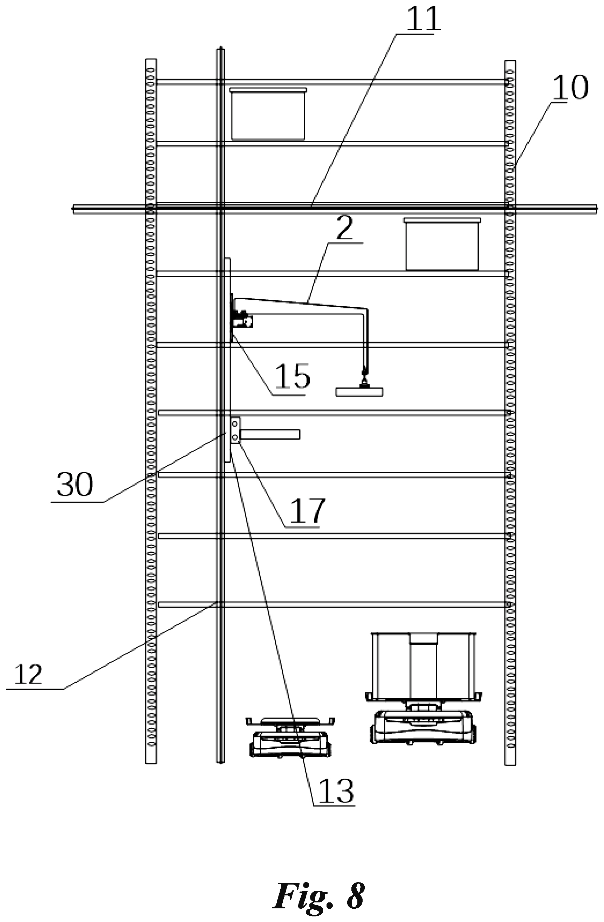

Referring to FIG. 8, in the present invention, the in-warehouse picking robot includes a picking task module and a push-pull bin task module.

Referring to FIG. 8, when the vertical transmission device is a fixed rail transmission device, the arrangement of the fixed rail transmission device on the rack is specifically implemented to include: a first transverse rail 11, a first upright 12, the first movable member 13, and a connecting mechanism of the push-pull bin task module 14.

It needs to be clear that in the present invention, the roadway direction of the multi-column racks is recorded as the X-axis, the direction perpendicular to the X-axis on the ground surface is recorded as the Y-axis, and the height direction of the racks is recorded as the Z-axis.

It should be particularly noted that the push-pull module of the push-pull bin task module 14 can perform access operations on bins that are densely arranged in the three-dimensional storage and are adjacent or have a hooking relationship. For example, in the depth direction (Y-axis), a push-pull arm of the push-pull bin task module can be used to access a specific bin among a plurality of bins.

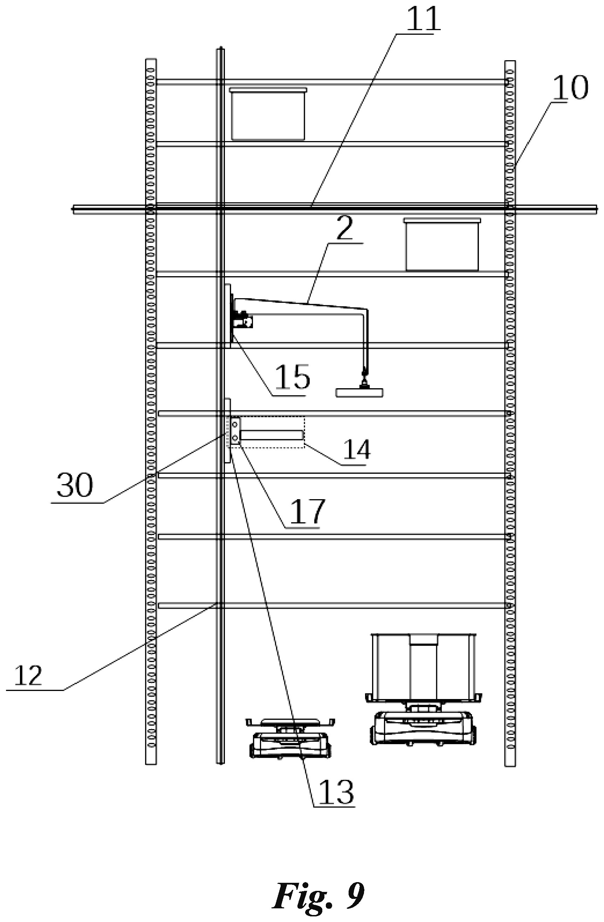

Referring to FIGS. 8 and 9, in one case, when the picking task module 2 and/or the push-pull bin task module 14 are both mounted on the first transverse rail, the first upright, and the first movable member, the connecting mechanism of the picking task module and the connecting mechanism of the push-pull bin task module can be integrated to drive the picking task module to sort goods and drive the push-pull bin task module to store bins.

Referring to FIG. 9, in another case, when the picking task module and/or the push-pull bin task module are both mounted on the first transverse rail, the first upright, and the first movable member, the connecting mechanism of the picking task module and the connecting mechanism of the push-pull bin task module are provided separately and cooperate according to the current task.

In this embodiment, the fixed rail transmission device and the goods picking device are respectively arranged on different uprights. In large-scale, dense storage scenarios, such as a warehouse storing over 100,000 bins with a flow rate of 10,000 bins/hour, multiple units of the fixed rail transmission device and the goods picking device can be mounted on the same rack to meet the demands of high-flow orders. When the fixed rail transmission device and the goods picking device work together, taking order outbound as an example, if goods X of order A or a certain SKU (Stock Keeping Unit, the basic unit for inventory measurement) need to be sent outbound, the fixed rail transmission device uses the push-pull bin task module, i.e., the push-pull bin module, at the target slot of the target rack to pull out the target bin, enabling goods X to be sucked by the suction mechanism 201 and/or the gripping mechanism of the goods picking device. Before sucking, an identification module is needed to identify goods X or a SKU. The identification module can be arranged on the goods picking device and/or the fixed rail transmission device. The identification module can be arranged on the goods picking device and/or the fixed rail transmission device. The identification module can be a monocular camera, a laser camera, or a depth camera.

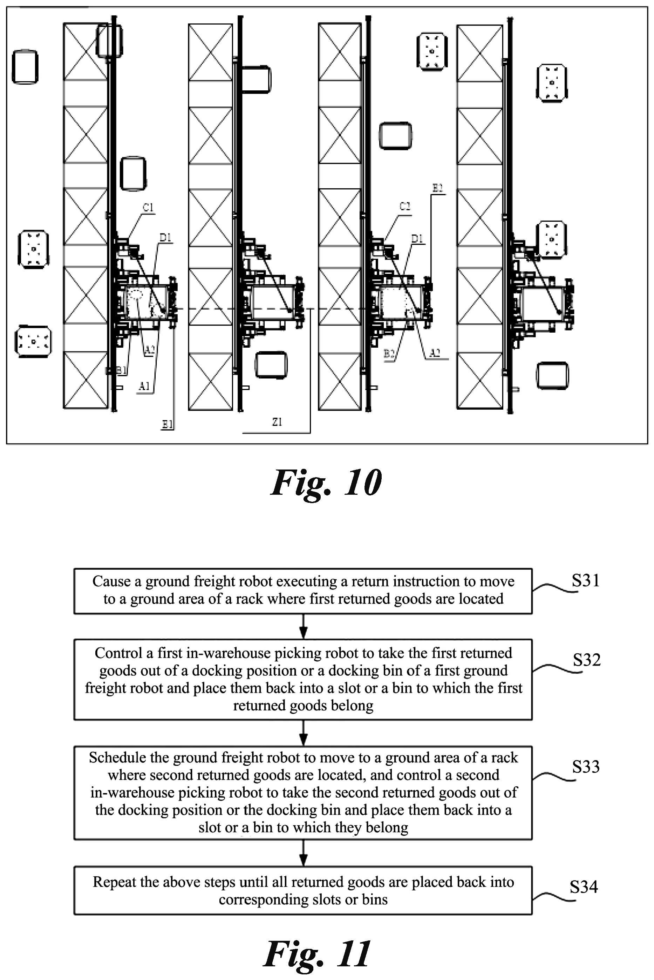

Referring to FIGS. 10 and 11, an in-warehouse picking control method for a stereoscopic warehouse is provided, wherein the stereoscopic warehouse includes a plurality of racks, the racks are provided with multi-tier reservation units, and bins are placed in slots of the reservation units; and according to return demand information, the control server is configured for:
- S31: causing an autonomous mobile robot D1 executing a return instruction to move to a ground area of a rack where first returned goods A1 are located;
- S32: controlling a first in-warehouse picking robot C1 to take the first returned goods A1 out of a docking position or a docking bin of the autonomous mobile robot D1 executing the return instruction and place them back into a slot or a bin to which the first returned goods A1 belong (marked as bin B1 in FIG. 10);
- S33: scheduling the autonomous mobile robot to move to a ground area of a rack where second returned goods A2 are located, and control a second in-warehouse picking robot C2 to take the second returned goods A2 out of the docking position or the docking bin and place them back into a slot or a bin to which the second returned goods belong (marked as bin B2 in FIG. 10); and
- S34: repeating the above steps until all returned goods are placed back into corresponding slots or bins.

The above steps are repeated, referring to FIG. 11, until all returned goods are placed back into the bins, and the autonomous mobile robot empties all the returned goods it carried. The objective of repeating these steps is that the returned goods for an order can be three or more items. Then, based on the process of S31 to S33, the required returned goods A1, A2, A3 can be taken out from the docking assembly or the docking bin of the autonomous mobile robot, and the in-warehouse picking robot can grab or suck them, thereby returning them to the bins corresponding to each returned goods.

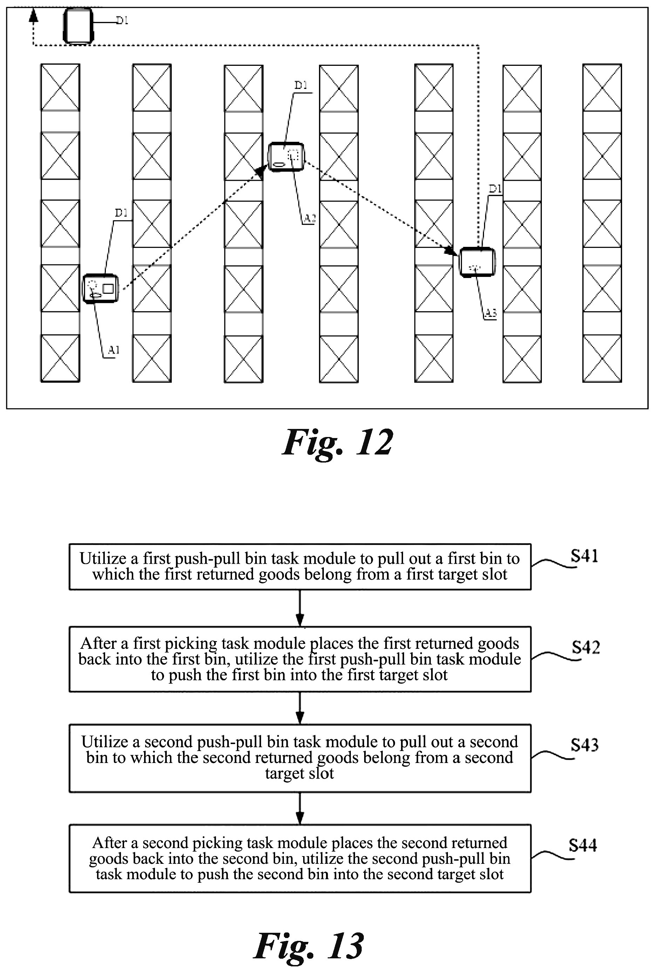

Referring to FIGS. 10, 11, 12, and 13, the controlling a first in-warehouse picking robot to take the first returned goods out of a docking position or a docking bin of a first autonomous mobile robot and place the first returned goods back into a slot or a bin to which the first returned goods belong is implemented by the following steps:
- S41: utilizing a first push-pull bin task module E1 to pull out a first bin to which the first returned goods belong from a first target slot;
- S42: after a first picking task module places the first returned goods A1 back into the first bin, utilizing the first push-pull bin task module E1 to push the first bin into the first target slot;
- S43: utilizing a second push-pull bin task module E2 to pull out a second bin to which the second returned goods A2 belong from a second target slot; and
- S44: after a second picking task module places the second returned goods back into the second bin, utilizing the second push-pull bin task module E2 to push the second bin into the second target slot.

As can be seen with reference to FIGS. 10, 11, 12, and 13, in a return order, the autonomous mobile robot D1 places all returned goods (A1, A2, A3) into its docking assembly or docking bin according to the order to be returned, enabling continuous goods return.

In the prior art, the autonomous mobile robot D1 carries a single item repeatedly back to the workstation for return. That is, the return of goods A1, A2, and A3 relies on the autonomous mobile robot D1 making three round trips to complete the return.

However, in the present invention, the in-warehouse picking robot directly takes the returned goods out of the docking assembly or the docking bin of the autonomous mobile robot D1, and utilizes the path planning function of the autonomous mobile robot (the path of the autonomous mobile robot is indicated by a dashed line in the figure) for continuous operation, reducing round trips. This saves the return time wasted when the autonomous mobile robot D1 carries a single returned cargo repeatedly back to the workstation, improving the operational efficiency of the return operation by nearly 100% compared to the prior art.

The structure and principles of the in-warehouse picking robot and the autonomous mobile robot involved in this embodiment can be referred to the previous embodiments. They will not be repeated or illustrated in this operation scenario.

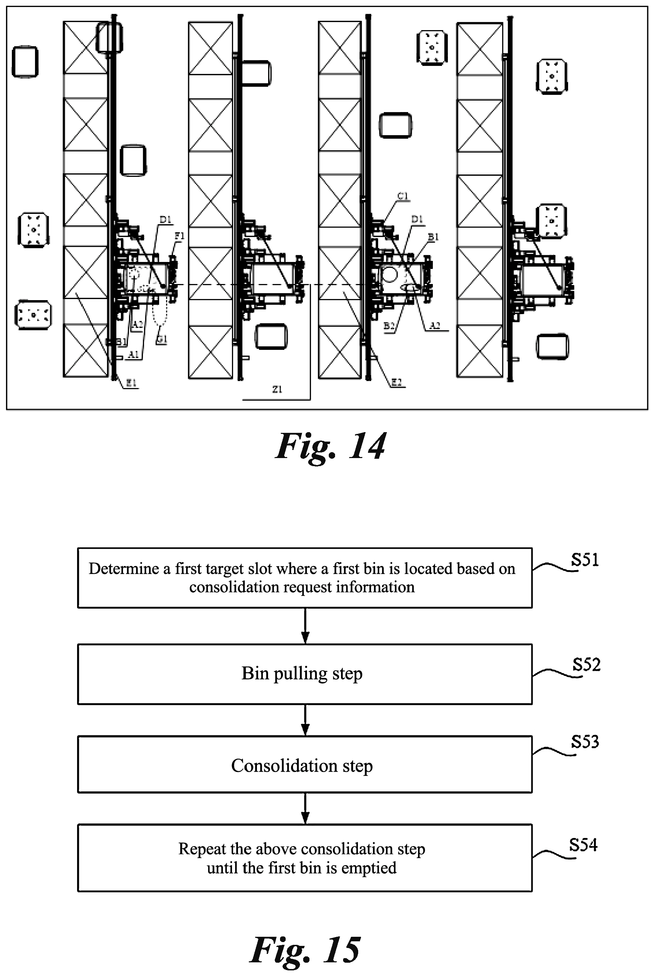

Referring to FIGS. 14 and 15, an in-warehouse picking control method for a stereoscopic warehouse is provided. The stereoscopic warehouse includes a plurality of racks, each of the racks is provided with multi-tier reservation units, and bins are placed in slots of the reservation units. The control server is configured for:
- S51: determining a first target slot E1 where a first bin B1 is located based on consolidation request information;
- S52: in a bin pulling step, causing an autonomous mobile robot D1 executing a consolidation instruction to move to a ground area of a rack where the first target slot is located, controlling a bin pulling task module F1 corresponding to the first target slot D1 to place the first bin B1 on a docking assembly of the autonomous mobile robot D1 (the movement path of the first bin B1 is marked as G1);
- S53: in a consolidation step, scheduling the autonomous mobile robot D1 to move to a ground area of a rack where a second bin B2 is located, and controlling an in-warehouse picking robot C1 corresponding to the second bin B2 to take part or all of goods (marked as A1, A2 in the figure) in the first bin B1 out of the first bin B1 and place them into the second bin B2; and
- S54: repeating the above consolidation step until the first bin B1 is emptied.

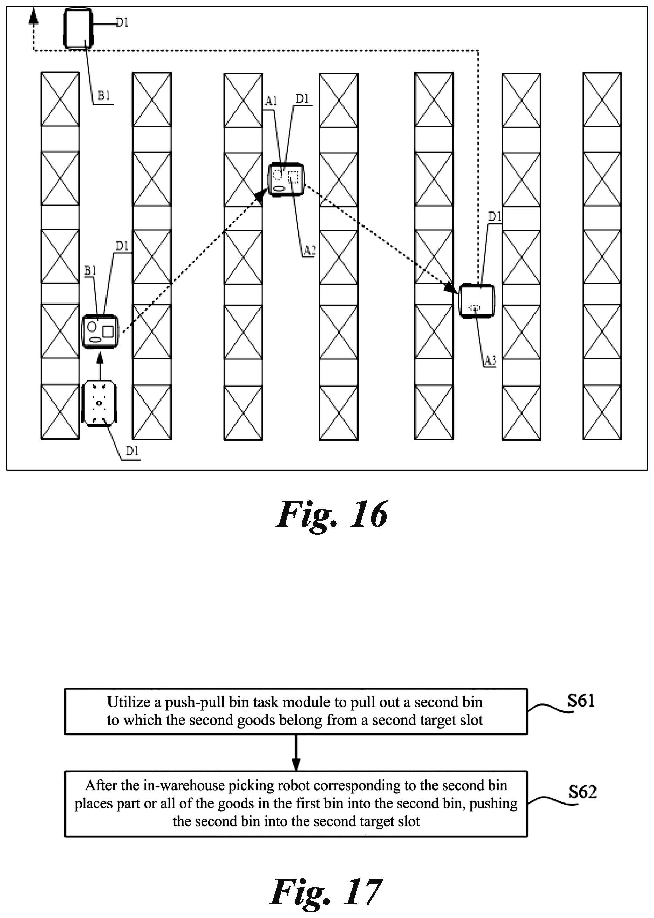

The above steps are repeated, referring to FIG. 16, until the autonomous mobile robot carries away the original goods bin from the rack through the above steps, transporting the empty bin B1 away from the site. The objective of repeating these steps is that, according to consolidation requirements, the goods that need to be transferred from one bin to another can be three items (A1, A2, A3) or more, and need to be placed into corresponding bins to obtain empty bins for processes such as transfer, shipment, or inbound. Then, based on the process of S51 to S53, the goods in the bin that needs to be emptied can be taken out from the docking bin of the autonomous mobile robot D1, and the in-warehouse picking robot grabs or sucks them, thereby obtaining an empty bin which is then carried away.

The consolidation request information is specifically a consolidation request for the same SKU. In most application scenarios, consolidation requests occur between bins with the same SKU, to facilitate quick identification, shorten the consolidation travel path of the autonomous mobile robot, and improve consolidation efficiency.

Referring to FIGS. 15 and 17, an in-warehouse picking robot corresponding to the second bin takes part or all of goods in the first bin out of the first bin and places the goods into the second bin, which is specifically implemented by the following steps:
- S61: utilizing a push-pull bin task module to pull out a second bin to which the second goods belong from a second target slot; and
- S62: after the in-warehouse picking robot corresponding to the second bin places part or all of the goods in the first bin into the second bin, pushing the second bin into the second target slot.

As can be seen with reference to FIGS. 16 and 17, in a consolidation order, the autonomous mobile robot D1 places the bin to be emptied onto its docking assembly according to the consolidation request, enabling continuous goods emptying operations.

In the prior art, the autonomous mobile robot D1 carries bins and a single item repeatedly back to the workstation for consolidation operations. That is, the consolidation of goods A1, A2, and A3 relies on the autonomous mobile robot D1 making three round trips to achieve the purpose of emptying the first bin.

However, in the present invention, the picking robot D1 places bin B1 along with goods A1, A2, A3 inside it onto the docking assembly of the autonomous mobile robot, and sequentially places A1, A2 into the target bin through consolidation operations, and then places A3 into the target bin. Moreover, the goods picking robot directly takes the consolidated goods out of bin B1 of the autonomous mobile robot D1 and utilizes the path planning function of the autonomous mobile robot (the path of the autonomous mobile robot is indicated by a dashed line in the figure) for continuous operation, reducing round trips. This saves the time wasted when the autonomous mobile robot D1 repeatedly carries bins back to the workstation or sorting table to empty them, improving the operational efficiency of the consolidation operation by nearly 100% compared to the prior art.

The structure and principles of the in-warehouse picking robot and the autonomous mobile robot involved in this embodiment can be referred to the previous embodiments. They will not be repeated or illustrated in this operation scenario.

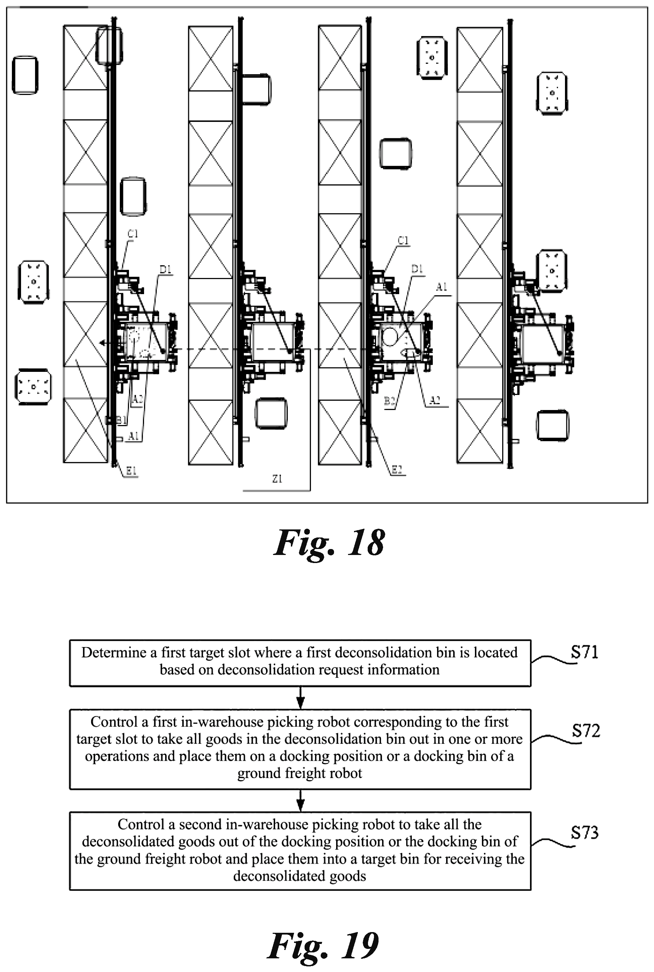

Referring to FIGS. 18 and 19, an in-warehouse picking control method for a stereoscopic warehouse is provided. The stereoscopic warehouse includes a plurality of racks, the racks are provided with multi-tier reservation units, and bins are placed in slots of the reservation units. According to a current order, the control server is configured for:
- S71: determining a first target slot E1 where a first reverse goods consolidation bin B1 is located based on reverse goods consolidation request information;
- S72: causing an autonomous mobile robot D1 executing a reverse goods consolidation instruction to move to the first target slot E1, and controlling a first in-warehouse picking robot C1 corresponding to the first target slot E1 to take all goods (marked as A1, A2 in the figure) in the reverse goods consolidation bin B1 out in one or more operations and place them on a docking position or a docking bin of the autonomous mobile robot D1; and
- S73: scheduling the autonomous mobile robot to move to a ground area of a rack where a target bin for receiving the deconsolidated goods is located, and controlling a second in-warehouse picking robot C2 to take all the deconsolidated goods out of the docking position or the docking bin of the autonomous mobile robot D1 and place them into the target bin B2 for receiving the deconsolidated goods.

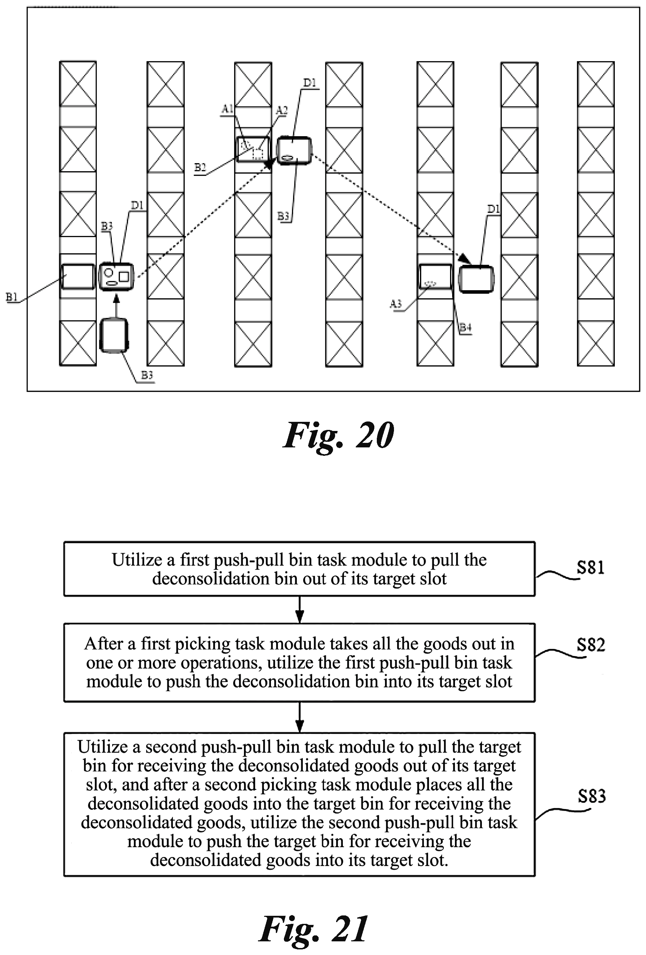

The above steps are repeated, referring to FIG. 20, until the autonomous mobile robot empties the original goods bins on the rack through the above steps. The objective of repeating these steps is that, according to reverse goods consolidation requirements, the goods that need to be deconsolidated can be three items (A1, A2, A3) or more, and need to be placed into target bins B2, B4 for receiving the goods, to obtain empty bins for processes such as transfer, shipment, or inbound. Then, based on the process of S71 to S73, for the goods in the bin that needs to be emptied, the first in-warehouse picking robot corresponding to the first target slot can be controlled to take them out of the bin B1 that needs reverse goods consolidation and place them into the docking bin B3 of the autonomous mobile robot, thereby obtaining the empty bin B1. Then, the second in-warehouse picking robot matched with the bins receiving these goods performs grabbing or sucking (as shown in the figure, goods A1 and A2 are placed into bin B2, and goods A3 are placed into bin B4) and places them into bins B2 and B4 that receive these goods.

Referring to FIGS. 20 and 21, a first in-warehouse picking robot corresponding to the first target slot takes all goods in the reverse goods consolidation bin out in one or more operations and places the goods on a docking position or a docking bin of the autonomous mobile robot, which is implemented by the following steps:
- S81: utilizing a first push-pull bin task module to pull the reverse goods consolidation bin out of its target slot; and
- S82: after a first picking task module takes all the goods out in one or more operations, utilizing the first push-pull bin task module to push the reverse goods consolidation bin into its target slot (direction of the arrow in FIG. 18).

Further, a second in-warehouse picking robot takes all the deconsolidated goods out of the docking position or the docking bin of the autonomous mobile robot and places the deconsolidated goods into the target bin, which is implemented by the following step:
- S83: utilizing a second push-pull bin task module to pull the target bin for receiving the deconsolidated goods out of its target slot; and after a second picking task module places all the deconsolidated goods into the target bin for receiving the deconsolidated goods, utilizing the second push-pull bin task module to push the target bin for receiving the deconsolidated goods into its target slot.

As can be seen with reference to FIGS. 18, 19, 20, and 21, in a return order, according to the reverse goods consolidation requirement, the autonomous mobile robot D1, using its docking assembly or docking bin, carries all the goods from the bin to be emptied, enabling continuous reverse goods consolidation to obtain one or more empty bins.

In the prior art, the autonomous mobile robot D1 carries bins and a single item repeatedly back to the workstation for reverse goods consolidation operations. That is, the reverse goods consolidation of goods A1, A2, and A3 relies on the autonomous mobile robot D1 making three round trips to achieve the purpose of emptying the bins.

That is, the in-warehouse picking robot directly takes out all the goods from the bin that needs reverse goods consolidation and places them on the docking assembly or docking bin of the autonomous mobile robot D1, and utilizes the path planning function of the autonomous mobile robot, thus saving the time wasted by the autonomous mobile robot D1 repeatedly taking goods out from a single bin.

It should be noted that, in this embodiment, the reverse goods consolidation request information is specifically a reverse goods consolidation request for the same SKU. In most application scenarios, reverse goods consolidation requests occur between bins with the same SKU, to facilitate quick identification, shorten the reverse goods consolidation travel path of the autonomous mobile robot, and improve reverse goods consolidation efficiency.

The structure and principles of the in-warehouse picking robot and the autonomous mobile robot involved in this embodiment can be referred to the previous embodiments. They will not be repeated or illustrated in this operation scenario.

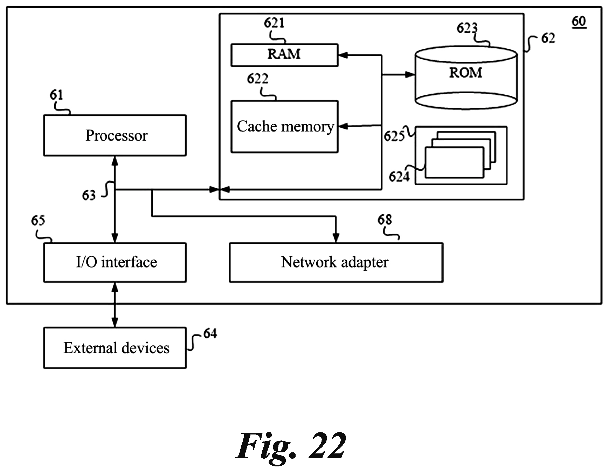

Referring to FIG. 22, the present invention further discloses an in-warehouse picking control system, including:
- at least one processor; and
- a memory communicatively connected to the at least one processor;
- wherein the memory stores instructions executable by the at least one processor, and the instructions, when executed by the at least one processor, cause the at least one processor to perform the in-warehouse picking control method in the above embodiments.

FIG. 22 shows a computing device 60 matching the methods of FIGS. 1 to 5.

It should be noted that the computing device 60 shown in FIG. 22 is merely an example and should not impose any limitations on the functionality and scope of use of the embodiments of the present invention.

As shown in FIG. 22, the server takes the form of a general-purpose computing device 60. Components of the computing device 60 can include but are not limited to: the above-mentioned at least one processor 61, the above-mentioned at least one memory 62, and a bus 63 connecting different system components (including the memory 62 and the processor 61).

The bus 63 represents one or more of several types of bus structures, including a memory bus or memory controller, a peripheral bus, a processor, or a local bus using any of a variety of bus architectures.

The memory 62 can include a readable medium in the form of volatile memory, such as a random-access memory (RAM) 621 and/or a cache memory 622 and can further include a read-only memory (ROM) 623.

The memory 62 can further include a program/utility 625 having a set (at least one) of program modules 624. Such program modules 624 include, but are not limited to, an operating system, one or more application programs, other program modules, and program data. Each or some combination of these examples can include an implementation of a network environment.

The computing device 60 can also communicate with one or more external devices 64 (e.g., a keyboard, a pointing device, etc.), and can also communicate with one or more devices that enable a user to interact with the computing device 60, and/or with any device (e.g., a router, a modem, etc.) that enables the computing device 60 to communicate with one or more other computing devices. This communication can be performed through an input/output (I/O) interface 65. Furthermore, the computing device 60 can also communicate with one or more networks (e.g., a Local Area Network (LAN), a Wide Area Network (WAN), and/or a public network, such as the Internet) through a network adapter 68. As shown, the network adapter 68 communicates with other modules configured as the computing device 60 via the bus 63. It should be understood that although not shown in the figure, other hardware and/or software modules can be used in conjunction with the computing device 60, including but not limited to: microcode, device drivers, redundant processors, external disk drive arrays, RAID systems, tape drives, and data backup storage systems, etc.

In some possible implementations, a computing device according to the present invention can include at least one processor and at least one memory (such as a first server). Here, the memory stores program code which, when executed by the processor, causes the processor to perform the steps in the in-warehouse picking control method according to various exemplary embodiments of the present invention described above in this specification.

In summary, in the present invention, a goods picking device is utilized to cooperate with a push-pull bin module, and a freight robot at the bottom of the rack is utilized to complete high-flow key operations such as picking, returns, and consolidation according to demands of current orders. The goods picking device is provided with a transverse rail for an upright to move. Through the configuration of racks and the transformation of a rack tier at the bottom of a reservation unit, a running passageway is provided for the freight robot or a picking robot, which fundamentally solves the problem of waste in existing reservation unit and makes in-warehouse picking possible in dense rack scenarios. On this basis, bins can be accessed through the push-pull bin module and placed into or taken out of a docking assembly or a docking bin of the freight robot running at the bottom of the rack, thereby successfully completing goods storage, goods/bin transfer, and goods/bin picking within the reservation unit. On the basis of realizing in-warehouse goods picking, the utilization rate of storage space, the speed of goods in/out flow, and picking efficiency are greatly improved.

Finally, it should be noted that: the various embodiments in this specification are described in a progressive manner, each embodiment focuses on the differences from other embodiments, and the same or similar parts between the various embodiments can be referred to each other. The above embodiments in this specification are only intended to illustrate the technical solutions of the present invention, rather than to limit them. Although the present invention has been described in detail with reference to the foregoing embodiments, those of ordinary skill in the art should understand that they can still modify the technical solutions described in the foregoing embodiments, or perform equivalent substitutions for some or all of the technical features; and these modifications or substitutions do not cause the essence of the corresponding technical solutions to depart from the scope of the technical solutions of the embodiments of the present invention.

### Industrial Applicability

With the above solutions, through the configuration of racks and the transformation of a rack tier at the bottom of a storage space, a running passageway is provided for the freight robot or a picking robot, which fundamentally solves the existing problem of waste in storage space and makes in-warehouse picking possible in dense rack scenarios. On this basis, bins can be accessed through the push-pull bin module and placed into or taken out of a docking assembly or a docking bin of the freight robot running at the bottom of the rack, thereby successfully completing goods storage, goods/bin transfer, and goods/bin picking within the storage space. On the basis of realizing in-warehouse goods picking, the utilization rate of storage space, the speed of goods in/out flow, and picking efficiency are greatly improved.

## Claims

1. An in-warehouse picking control method for a stereoscopic warehouse, wherein the stereoscopic warehouse comprises a plurality of racks, the racks are provided with multi-tier reservation units, and bins are placed in slots of the reservation units; and according to a current order, a control server is configured for, determining a first target slot where first goods to be picked are located based on goods picking information of the current order;
controlling a first in-warehouse picking robot corresponding to the first target slot to take out the first goods to be picked and place the first goods to be picked on a docking assembly or a docking bin of an autonomous mobile robot;
scheduling the autonomous mobile robot to move to a second target slot where second goods to be picked are located, wherein the autonomous mobile robot is positioned within a reachable range of a second in-warehouse picking robot;
controlling the second in-warehouse picking robot to take the second goods to be picked out of the second target slot and place the second goods to be picked on the docking assembly or the docking bin of the autonomous mobile robot; and
repeating the above steps until all goods to be picked are placed on the docking assembly or the docking bin of the autonomous mobile robot, such that the autonomous mobile robot transports all the goods to be picked to a workstation.

2. The in-warehouse picking control method according to claim 1, wherein the controlling the first in-warehouse picking robot corresponding to the first target slot to take out the first goods to be picked comprises:
utilizing a first push-pull bin task module to pull out a first bin where the first goods to be picked are located from the first target slot; and
pushing the first bin into the first target slot after a first picking task module takes out the first goods to be picked;
utilizing a second push-pull bin task module to pull out a second bin where the second goods to be picked are located from a second target slot; and
pushing the second bin into the second target slot after a second picking task module takes out the second goods to be picked.

3. The in-warehouse picking control method according to claim 1 or 2, wherein the in-warehouse picking robot comprises a picking task module and a push-pull bin task module;
the picking task module places goods into a docking assembly or a docking bin of an autonomous mobile robot running at a bottom of the rack, or takes goods out of the docking assembly or the docking bin and place the goods into the bin; and the picking task module at least comprises a first movable member and a picking mechanism;
one or more partitions of slots of a lowest rack tier are removed from the rack, to provide a passageway for the autonomous mobile robot; or
one or more rack tiers are removed from the rack, to provide a matching height and support the autonomous mobile robot in running on the aisle.

4. The in-warehouse picking control method according to claim 3, wherein the picking mechanism comprises a suction mechanism and/or a gripping mechanism; the suction mechanism and/or the gripping mechanism are connected to the first movable member through a connecting mechanism of the picking task module.

5. The in-warehouse picking control method according to any one of claims 2 to 4, wherein an arrangement of a goods picking device on the rack is specifically implemented to comprise: a first transverse rail, a first upright, the first movable member, and a connecting mechanism of the picking task module.

6. The in-warehouse picking control method according to any one of claims 2 to 5, wherein an arrangement of a fixed rail transmission device on the rack is specifically implemented to comprise: the first transverse rail, the first upright, the first movable member, and a connecting mechanism of the push-pull bin task module; and
the connecting mechanism of the push-pull bin task module is provided with:
a support structure of a push-pull bin module; and
a conveying component of the push-pull bin module.

7. The in-warehouse picking control method according to any one of claims 2 to 6, wherein a push-pull module of the push-pull bin task module implements an operation of accessing bins which are densely distributed in the stereoscopic warehouse and are adjacent to each other or have a hooking relationship.

8. An in-warehouse picking control method for a stereoscopic warehouse, wherein the stereoscopic warehouse comprises a plurality of racks, the racks are provided with multi-tier reservation units, and bins are placed in slots of the reservation units; and according to return demand information, a control server is configured for:
causing an autonomous mobile robot executing a return instruction to move to a ground area of a rack where first returned goods are located, and controlling a first in-warehouse picking robot to take the first returned goods out of a docking position or a docking bin of a first autonomous mobile robot and place the first returned goods back into a slot or a bin to which the first returned goods belong;
scheduling the autonomous mobile robot to move to a ground area of a rack where second returned goods are located, and controlling a second in-warehouse picking robot to take the second returned goods out of the docking position or the docking bin and place the second returned goods back into a slot or a bin to which the second returned goods belong; and
repeating the above steps until all returned goods are placed back into corresponding slots or bins.

9. The in-warehouse picking control method according to claim 8, wherein the controlling the first in-warehouse picking robot to take the first returned goods out of the docking position or the docking bin of the first autonomous mobile robot and place the first returned goods back into the slot or the bin to which the first returned goods belong comprises:
utilizing a first push-pull bin task module to pull out a first bin to which the first returned goods belong from a first target slot; and
utilizing the first push-pull bin task module to push the first bin into the first target slot after a first picking task module places the first returned goods back into the first bin; and
the controlling the second in-warehouse picking robot to take the second returned goods out of the docking position or the docking bin and place the second returned goods back into the slot or the bin to which the second returned goods belong comprises:
utilizing a second push-pull bin task module to pull out a second bin to which the second returned goods belong from a second target slot; and
utilizing the second push-pull bin task module to push the second bin into the second target slot after a second picking task module places the second returned goods back into the second bin.

10. The in-warehouse picking control method according to claim 8 or 9, wherein the in-warehouse picking robot comprises a picking task module and a push-pull bin task module;
the picking task module places goods into a docking assembly or a docking bin of an autonomous mobile robot running at a bottom of the rack, or takes goods out of the docking assembly or the docking bin and place the goods into a bin; and the picking task module at least comprises a first movable member and a picking mechanism;
one or more partitions of slots of a lowest rack tier are removed from the rack, to provide a passageway for the autonomous mobile robot; or
one or more rack tiers are removed from the rack, to provide a matching height and support the freight robot running on the aisle.

11. The in-warehouse picking control method according to claim 9 or 10, wherein an arrangement of a fixed rail transmission device on the rack is specifically implemented to comprise: a first transverse rail, a first upright, a first movable member, and a connecting mechanism of the push-pull bin task module; and
the connecting mechanism of the push-pull bin task module is provided with:
a support structure of a push-pull bin module; and
a conveying component of the push-pull bin module.

12. An in-warehouse picking control method for a stereoscopic warehouse, wherein the stereoscopic warehouse comprises a plurality of racks, the racks are provided with multi-tier reservation units, and bins are placed in slots of the reservation units; and according to consolidation request information, a control server is configured for: determining a first target slot where a first bin is located;
in a bin pulling step, causing an autonomous mobile robot executing a consolidation instruction to move to a ground area of a rack where the first target slot is located, controlling a bin pulling task module corresponding to the first target slot to place the first bin on a docking assembly of the autonomous mobile robot;
in a consolidation step, scheduling the autonomous mobile robot to move to a ground area of a rack where a second bin is located, and controlling an in-warehouse picking robot corresponding to the second bin to take part or all of goods in the first bin out of the first bin and place the goods into the second bin; and
repeating the above consolidation step until the first bin is emptied.

13. The in-warehouse picking control method according to claim 12, wherein the consolidation request information is specifically a consolidation request for the same kind of SKU.

14. The in-warehouse picking control method according to claim 12 or 13, wherein the controlling the in-warehouse picking robot corresponding to the second bin to take part or all of goods in the first bin out of the first bin and place the goods into the second bin comprises:
utilizing a push-pull bin task module to pull out a second bin to which the second goods belong from a second target slot; and
pushing the second bin into the second target slot after the in-warehouse picking robot corresponding to the second bin places part or all of the goods in the first bin into the second bin.

15. The in-warehouse picking control method according to any one of claims 12 to 14, wherein the in-warehouse picking robot comprises a picking task module and a push-pull bin task module;
the picking task module places goods into a docking assembly or a docking bin of an autonomous mobile robot running at a bottom of the rack, or takes goods out of the docking assembly or the docking bin and places the goods into the bin; and the picking task module at least comprises a first movable member and a picking mechanism;
one or more partitions of slots of a lowest rack tier are removed from the rack, to provide a passageway for the autonomous mobile robot; or
one or more rack tiers are removed from the rack, to provide a matching height and support the freight robot running on the aisle.

16. The in-warehouse picking control method according to any one of claims 12 to 15, wherein an arrangement of a fixed rail transmission device on the rack is specifically implemented to comprise: a first transverse rail, a first upright, a first movable member, and a connecting mechanism of the push-pull bin task module; and
a connecting mechanism of the push-pull bin task module is provided with:
a support structure of a push-pull bin module; and
a conveying component of the push-pull bin module.

17. An in-warehouse picking control method for a stereoscopic warehouse, wherein the stereoscopic warehouse comprises a plurality of racks, the racks are provided with multi-tier reservation units, and bins are placed in slots of the reservation units; and according to a current order, a control server is configured for: determining a first target slot where a first reverse goods consolidation bin is located based on reverse goods consolidation request information;
causing an autonomous mobile robot executing a reverse goods consolidation instruction to move to the first target slot, and controlling a first in-warehouse picking robot corresponding to the first target slot to take all goods in the reverse goods consolidation bin out in one or more operations and place the goods on a docking position or a docking bin of the autonomous mobile robot; and
scheduling the autonomous mobile robot to move to a ground area of a rack where a target bin for receiving the deconsolidated goods is located, and controlling a second in-warehouse picking robot to take all the deconsolidated goods out of the docking position or the docking bin of the autonomous mobile robot and place the deconsolidated goods into the target bin.

18. The in-warehouse picking control method according to claim 17, wherein the controlling the first in-warehouse picking robot corresponding to the first target slot to take all goods in the reverse goods consolidation bin out in one or more operations and place the goods on the docking position or the docking bin of the autonomous mobile robot comprises:
utilizing a first push-pull bin task module to pull the reverse goods consolidation bin out of a target slot of the reverse goods consolidation bin; and
utilizing the first push-pull bin task module to push the reverse goods consolidation bin into the target slot of the reverse goods consolidation bin after a first picking task module takes all the goods out in one or more operations; and
the controlling the second in-warehouse picking robot to take all the deconsolidated goods out of the docking position or the docking bin of the autonomous mobile robot and place the deconsolidated goods into the target bin comprises:
utilizing a second push-pull bin task module to pull the target bin for receiving the deconsolidated goods out of its target slot; and after a second picking task module places all the deconsolidated goods into the target bin for receiving the deconsolidated goods, utilizing the second push-pull bin task module to push the target bin for receiving the deconsolidated goods into its target slot.

19. The in-warehouse picking control method according to claim 17 or 18, wherein the in-warehouse picking robot comprises a picking task module and a push-pull bin task module;
the picking task module places goods into a docking assembly or a docking bin of an autonomous mobile robot running at a bottom of the rack, or takes goods out of the docking assembly or the docking bin and places the goods into the bin; and the picking task module at least comprises a first movable member and a picking mechanism;
one or more partitions of slots of a lowest rack tier are removed from the rack, to provide a passageway for the autonomous mobile robot; or
one or more rack tiers are removed from the rack, to provide a matching height and support the freight robot running on the aisle.

20. The in-warehouse picking control method according to claim 18 or 19, wherein an arrangement of a fixed rail transmission device on the rack is specifically implemented to comprise: a first transverse rail, a first upright, a first movable member, and a connecting mechanism of the push-pull bin task module; and
the connecting mechanism of the push-pull bin task module is provided with:
a support structure of a push-pull bin module; and
a conveying component of the push-pull bin module.

21. The in-warehouse picking control method according to any one of claims 17 to 20, wherein the reverse goods consolidation request information is specifically a reverse goods consolidation request for the same kind of SKU.

22. An in-warehouse picking control system, comprising:
at least one processor, and a memory communicatively connected to the at least one processor, wherein
the memory stores instructions executable by the at least one processor, and the instructions, when executed by the at least one processor, cause the at least one processor to perform the method according to any one of claims 1 to 21.
